# EUROPEAN PATENT SPECIFICATION

(11) **EP 1 044 540 B1**
(45) Date of publication and mention of the grant of the patent: **25.06.2008**
(21) Application number: 98964621.1
(22) Date of filing: 17.12.1998
(51) Int. Cl.: H04L 12/56, H04L 29/06, H04L 12/24

(54) **EXTERNAL ROUTING MANAGER**
EXTERNER LEITWEGLENKUNGSVERWALTER
GESTIONNAIRE D'ACHEMINEMENT EXTERNE

(30) Priority: 19.12.1997 SE 9704772
(43) Date of publication of application: 18.10.2000
(73) Proprietor: TELIASONERA AB, 106 63 Stockholm (SE)
(72) Inventor: BERGSTEN, Anders, S-977 52 Luleaa (SE); BODIN, Ulf, S-973 32 Luleaa (SE); ERIKSSON, Anders, S-973 32 Luleaa (SE); KLITTBY, Nils-Ake, S-976 32 Luleaa (SE); LARSSON, Anders, S-977 53 Luleaa (SE); NORDGREN, Björn, S-973 33 Luleaa (SE); SVANBERG, Emil, S-977 52 Luleaa (SE)
(74) Representative: Hopfgarten, Nils
(86) International application number: PCT/SE1998/002356
(87) International publication number: WO 1999/033277

(56) References cited:
- EP-A1- 0 637 152
- WO-A2-97/18637
- WO-A2-98/37727
- FR-A1- 2 707 775
- US-A- 5 265 092

## Description

### Field of the invention

The present invention relates to a method and a device for routing of information packets by means of routing protocols in a network, preferably the Internet.

### Prior art

Different methods and devices for speeding up the path selection in packet switched networks are known.

Thus WO 98 37727 describes a proxy-controlled ATM subnetwork comprising an interconnected mesh of simple ATM switches, end stations and multi-access buses implemented in hardware configurations. Software for signalling and management functions are located in computers outside the interconnected mesh. An external controller acts as a proxy for the simple ATM switches and perform all virtual channel connection set-up within the interconnected mesh. Proxy controllers manage each simple end station and proxy signalling agents permit standard ATM devices to be connected to the simple switches. These proxy processes communicate with the devices within the interconnected mesh via a control protocol of signal cell messages delivered over dedicated permanent virtual circuits. The external controller performs a two-phase distributed topology algorithm to gain knowledge of the topology of the interconnection mesh sufficient to establish virtual channel connections.

US 5 265 092 discloses a method for providing loop free and shortest path routing of data packets in a network having a plurality of switches, routing messages, links connecting the switches and also a plurality of channels connecting the switches to the links.

In WO 97 18637 the provision of connection-oriented services for packet switched data communication networks is described. Topology services include a link state topology exchange among switches, which provides each switch with a complete topology graph of the network. This enables an access switch receiving a data packet to determine a complete path from a source end system to a destination end system. Path determination services enable multiple paths from source to destination. A distributed call rerouting service is provided wherein if a link on an active path fails, each switch receives a topology change notification and unmaps any connection involving the failed link. Resolution of networks outside the switch domain is enabled to access switches listening to network and server route advertisements and maintaining the best routes to said networks and servers. The best route metrics may be combined with the best path metrics to determine a path from a first access switch to an egress switch connected to the extrenal network.

EP 0 637 152 discloses a way of speeding up the path selection in a packet switching network by splitting the network in backbone and local nodes. A set of nodes, interconnected by high throughput lines, are thus used to build a 'Backbone' with a high degree of meshing to allow the redundancy and reliability required by the user. Other nodes or 'local' nodes are attached to one or several backbone nodes. At the configuration the attribution, backbone or local, of each node is defined by the network designer. The routing algorithm takes advantage of the particular topology to reduce the complexity of paths computation. For a given connection, only a limited number of nodes are eligible and are taken into account by the algorithm in the optimal route search.

In FR 2 707 775 analysis is described which allows regrouping in one and the same memory of all dynamic and parameterisable information, treatment in the case of routing by the source, treatment in one and the same device for several protocol levels, and for a common level for different protocols. The analysis is performed of informations contained in data structures for provision to an external system the necessary informations for the transfer of large quantities of the data structures or for their treatment by an intelligent external system, in which the significant fields of the data structures are analysed by utilizing the principle of translation lists by successive indirections in a two-dimensional table, each line of the table constituting a register of 2*k* cells where k is the length of the layer addressed. The search in the table is performed with the rhythm of information provision by layers of data structures.

The Internet today utilizes in the main different distributed routing protocols to manage the routing of Internet Protocol (IP)-packets. These distributed protocols contribute to making Internet a robust and scaleable network.

These protocols, however, also have some disadvantages. It will take comparatively long time to introduce new routing mechanisms, and the algorithms which are used to calculate routes are not allowed to be too demanding as far as calculation is concerned. In addition it is difficult to take into consideration demands from individual flows as far as the quality of the route is concerned, and/or calculate routes based on network information in combination with service information. The aim of the present invention is to remove these disadvantages.

### Summary of the invention

The above mentioned aim is achieved by a method and a device for routing of information packets by means of distributed routing protocols in a network, at which an External Routing Manager (ERM) is utilized to provide a plurality of not distributed routing algorithms in said network as a complement to routing algorithms which are utilized by said distributed routing protocol, as further specified in claims 1 and 5 respectively.

This invention has the potential of becoming a key component in Telia's future IP (Internet Protocol)-network. With an ERM it will be possible to use a plurality of route calculation algorithms in the same network, each one adapted to both optimal network utilization and the demands on the carrier service by different applications. It also will be possible to create quite new carrier services, for instance increased support of mobility. All this functionality moreover can be adapted, and also be exchanged, any time at the same time as the network all the time is in operation.

Telia will be able to offer highly worked up IP-based carrier services if the ERM-concept is introduced in Telia's IP-network. These services will both be possible to be tailor-made to specific customers or groups of customers, and be introduced and adapted very quickly at changed conditions and needs.

Further characteristics of the present invention are given in the subclaims.

### Brief description of the drawing

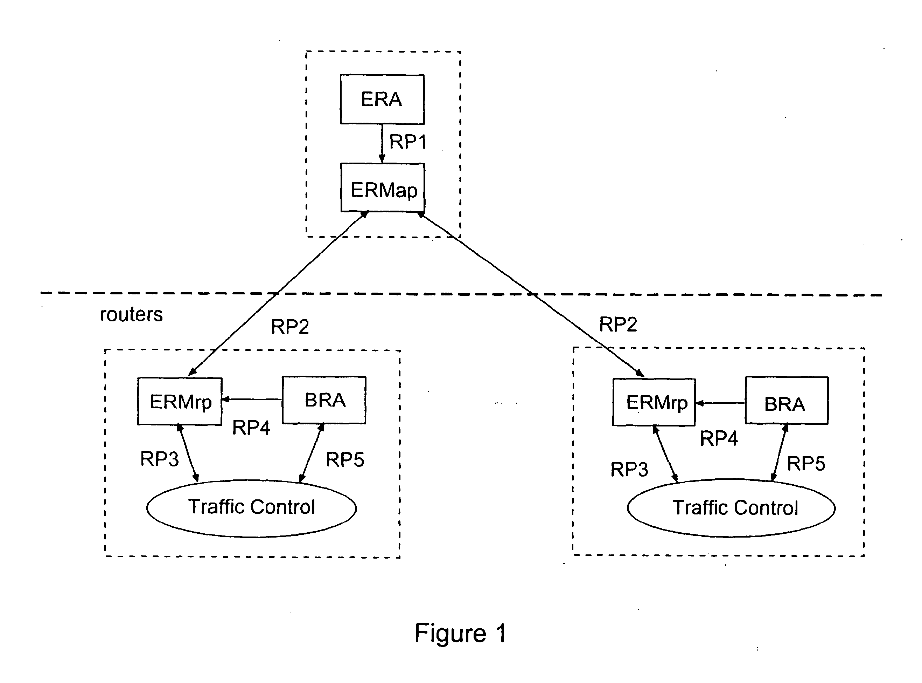

In the following a detailed description of an embodiment of the invention is given with reference to Figure 1.
Figure 1 shows the architecture of a device with an ERM according to the invention.

### Detailed description of an embodiment of the invention

In the following the overall functionality of the invention first will be described. After that, the function and the architecture of the ERM will be described. The different abbreviations which are mentioned throughout in the text are explained below:
- ERM: External Route Manager

- ERMₐₚ: External Route Manager agent part
- ERMᵣₚ: External Route Manager router part
- BRA: Basic Routing Algorithm
- RPA: Reference Point nr #
- ERA: Explicit Routing Algorithm

The invention intends to make possible the utilization of routing algorithms as a complement to the distributed routing protocols of today. The invention also allows these completing algorithms to be considerably more demanding regarding calculations, and facilitates the use of service information at route calculations.

The invention includes a definition of which functionality that is required to make possible simultaneous use of more than one route calculation algorithm, without risking long-lasting, or even permanent, routing loops.

The invention makes possible use of not distributed routing algorithms as a complement to the algorithms which are used by distributed routing protocols. This means that explicit routes are set up through the network which replace the route which is determined by a distributed protocol. To allow this, a check should made whether the new route is free from loops.

This new route is maintained until it is no longer needed, or until it is no longer valid due to that some kind of error has occurred. Such errors can be link errors, errors on any of the computers which are involved in maintaining the new route and/or routers which are included in this route.

When the new route no longer shall be used, concerned traffic returns to following the route which the distributed routing protocol has selected. At this return it is important to secure that no routing loops will arise. If routing loops yet should arise, these should be possible co detect and break.

The basic functionality which is required to make possible simultaneous use of more than one route calculation algorithm can be collected in two functional groups, free and independent of which algorithms that are used to calculate explicit routes. We call these functional groups External Route Manager agent part, and router part (ERMap and ERMrp). When we refer to ERM, these two functional groups are referred to together.

The physical location of the ERM-functionality differs between ERMap and ERMrp. Figure 1 shows the possible physical location of the functional groups and which reference points that exist between them. The exact definition of the functions and the specifications of respective reference point, however, is not dealt with here as this invention relates to the conceptual design of the architecture.

ERMap should be localized in the same machine that has functions (ERA in Figure 1) to calculate explicit routes. This machine can be a router or a separate computer connected to the network where the explicit routes shall be used. The following functions are included in ERMap:
- check of that suggested explicit routes are free from loops.
- check whether potential loops may arise and, if so, identification of where such loops can arise, and
- attend to that potential loops do not occur.

ERMap interacts with ERMrp (RP2 in Figure 1) to establish and maintain explicit routes and prevent emergence of loops by specifying methods at errors which can cause loops. ERMrp shall be localized in all routers which are involved in the explicit routes which are established via ERM. The following functions are included in ERMrp:
- detection of error after established explicit routes, and
- measure to prevent or break loops.

ERMrp interacts with traffic-control functionality in the router (RP3) to establish and maintain explicit routes. ERMrp also shall have information from the traffic control (RP3), or from the distributed route calculation function (RP4) about errors, if any. At such errors ERMrp shall take measures to prevent loops, and inform ERMap about executed measures.

ERMrp also receives information from the distributed route calculation function (RP4) about current network topology and, possibly, network status. ERMrp forwards this information to ERMap which utilizes it to execute the above mentioned functions. This information is distributed in the network by a distributed routing protocol of "link state"-type, for instance OSPF, IS-IS etc.

ERA can when a new route is suggested (RP1) also suggest alternative routes. These can be used by ERMap to prepare a more rapid change to such an alternative route in case of error along the route which is used. This can be prepared by state being established in concerned ERMrp or by ERMap quite simply being prepared to distribute the alternative route to concerned ERMrp.

RP4 in Figure 1 is today usually used in a router to establish routes calculated by some distributed algorithm.

To sum up, it can be said that the invention differs from previously known technology chiefly by the managing of loops being separated from the route calculation algorithms. This results in that new algorithms can be developed quicker. The invention also makes it possible to return to the original route calculation algorithm if an error occurs. The concept and the mechanism for the managing of loops, and the return to the original algorithm, constitutes, as far as we know, new technology which is not previously known.

The above mentioned is only to be regarded as an advantageous embodiment, and the extent of protection of the invention is only defined in what is indicated in the enclosed claims.

## Claims

1. Method for routing of information packets by means of distributed routing protocols in a network,
**characterized in that** an External Route Manager, ERM, is utilized to provide a plurality of not distributed routing algorithms in said network as a complement to routing algorithms which are utilized by said distributed routing protocol, **in that** said ERM establishes at least one explicit route in said network which replaces the route which is determined by said distributed routing protocols, **in that** said explicit route is maintained until it is no longer needed, or until it is no longer valid due to the occurrence of an error, **in that** when said explicit route no longer shall be used, traffic in question reverts to following the route which said distributed routing protocol has selected, and **in that**, when traffic reverts to following the route which said distributed routing protocol has selected, it is secured that no routing loops arise, and if routing loops yet arise, they are detected and broken.

2. Method according to claim 1,
**characterized in that** said error is link error, error in computers, routers which maintain said explicit route.

3. Method according to claim 1.
**characterized in that** said ERM operates according to the steps to:
- check that suggested explicit route is free from loops;
- check whether potential loops may arise and identify where such loops may arise;
- prevent the occurrence of potential loops;
- detect errors along established, explicit route;
- break arisen loop.

4. Method according to any of the preceding claims,
**characterized in that** said network is an IP-network.

5. Device for routing of information packets by means of distributed routing protocols in a network, and including an External Route Manager, ERM, **characterized in that** said ERM is arranged to provide a plurality of not distributed routing algorithms in said network as a complement to routing algorithms which are utilized by said distributed routing protocols, **in that** said ERM includes an ERM agent-part, ERMap, and an ERM router part, ERMrp, said ERMap interacting with said ERMrp to establish and maintain explicit routes and prevent the occurence of loops by specifying measures to be taken at errors which can cause loops.

6. Device according to claim 5, **characterized in that** said ERMap is arranged in a machine which has functions to calculate explicit routes, and said ERMrp is arranged in all routers which are involved in the explicit routes which are established via said ERM.

7. Device according to claim 6, **characterized in that** said ERMap is arranged to check that calculated explicit routes are free from loops, to check whether potential loops may arise, and identify where such loops may arise, to prevent the occurrence of potential loops.

8. Device according to claim 7, **characterized in that** said ERMrp is arranged to detect errors along established explicit routes and to prevent or break loops.

9. Device according to any of the claims 5-8, **characterized in that** said network is an IP-network.

## Patentansprüche

1. Verfahren zum Leiten von Informationspaketen mit Hilfe von verteilten Leitwegprotokollen in einem Netz, **dadurch gekennzeichnet, dass** ein externer Leitwegverwalter, ERM benutzt wird, eine Mehrzahl von nicht verteilten Leitwegalgorithmen in dem Netz als Ergänzung zu Leitwegalgorithmen zu liefern, die durch das verteilte Leitwegprotokoll benutzt werden,
dass der ERM wenigstens einen expliziten Leitweg in dem Netz einrichtet, der den Leitweg ersetzt, der durch die verteilten Leitwegprotokolle bestimmt wird,
dass der explizite Leitweg aufrechterhalten wird, bis er nicht mehr benötigt wird oder bis er aufgrund des Auftretens eines Fehlers nicht mehr gültig ist,
dass, wenn der explizite Leitweg nicht mehr benutzt werden soll, der fragliche Verkehr darauf zurückkommt, dem Leitweg zu folgen, den das verteilte Leitwegprotokoll ausgewählt hat, und
dass, wenn der Verkehr darauf zurückkommt, dem Leitweg zu folgen, den das verteilte Leitwegprotokoll ausgewählt hat, es sichergestellt wird, dass keine Leitwegschlaufen auftreten und, wenn doch Leitwegschlaufen auftreten, diese detektiert und unterbrochen werden.

2. Verfahren nach Anspruch 1, **dadurch gekennzeichnet, dass** der Fehler ein Verbindungsfehler, Fehler in Computern, Routern ist, die den expliziten Leitweg aufrechterhalten.

3. Verfahren nach Anspruch 1, **dadurch gekennzeichnet, dass** der ERM gemäß den Schritten tätig ist, zu:
- prüfen, dass der vorgeschlagene explizite Leitweg frei von Schlaufen ist;
- prüfen, ob mögliche Schlaufen auftreten können und zu identifizieren, wo solche Schlaufen auftreten können;
- das Auftreten von möglichen Schlaufen zu verhindern;
- Fehler entlang eingerichtetem expliziten Leitweg zu detektieren;
- eine entstandene Schlaufe zu unterbrechen.

4. Verfahren nach einem der vorangehenden Ansprüche, **dadurch gekennzeichnet**e dass das Netz ein IP-Netz ist.

5. Einrichtung zum Leiten von Informationspaketen mit Hilfe von verteilten Leitwegprotokollen in einem Netz, und die einen externen Leitwegverwalter ERM einschließt, **dadurch gekennzeichnet, dass** der ERM dazu ausgebildet ist, eine Mehrzahl von nicht verteilten Leitwegalgorithmen im Netz als Ergänzung zu Leitwegalgorithmen zu schaffen, die durch die verteilten Leitwegprotokolle benutzt werden,
dass der ERM einen ERM-Agententeil, ERMap, und einen ERM-Routerteil, ERMrp, einschließt, welcher ERMap mit dem ERMrp wechselwirkt, um explizite Leitwege einzurichten und aufrechtzuerhalten und das Auftreten von Schlaufen zu verhindern, indem Maßnahmen angegeben werden, die bei Fehlern getroffen werden sollen, die Schlaufen bewirken.

6. Einrichtung nach Anspruch 5, **dadurch gekennzeichnet, dass** der ERMap in einer Maschine ausgebildet ist, die Funktionen hat, explizite Leitwege zu berechnen, und dass der ERMrp in allen Routern angeordnet ist, die mit den expliziten Leitwegen zu tun haben, die über den ERM eingerichtet werden.

7. Einrichtung nach Anspruch 6, **dadurch gekennzeichnet, dass** der ERMap dazu ausgebildet ist, zu prüfen, dass berechnete explizite Leitwege frei von Schlaufen sind, zu prüfen, ob potentielle Schlaufen auftreten können, und zu identifizieren, wo solche Schlaufen auftreten können, um das Auftreten von möglichen Schlaufen zu verhindern.

8. Einrichtung nach Anspruch 7, **dadurch gekennzeichnet, dass** der ERMrp dazu ausgebildet ist, Fehler entlang eingerichteter expliziter Leitwege zu detektieren und Schlaufen zu verhindern oder zu unterbrechen.

9. Einrichtung nach einem der Ansprüche 5 bis 8, **dadurch gekennzeichnet, dass** das Netz ein IP-Netz ist.

## Revendications

1. Procédé pour le routage de paquets d'informations au moyen de protocoles de routage distribués dans un réseau, **caractérisé en ce qu'**un gestionnaire de route externe, ERM, est utilisé pour fournir une pluralité d'algorithmes de routage non distribués dans ledit réseau comme un complément aux algorithmes de routage qui sont utilisés par lesdits protocoles de routage distribués, **en ce que** ledit ERM établit au moins une route explicite dans ledit réseau qui remplace la route qui est déterminée par lesdits protocoles de routage distribués, **en ce que** ladite route explicite est maintenue jusqu'à ce qu'elle ne soit plus nécessaire, ou jusqu'à ce qu'elle ne soit plus valide en raison de l'occurrence d'une erreur, **en ce que** lorsque ladite route explicite ne devra plus être utilisée, le trafic en question recommence à suivre la route que ledit protocole de routage distribué a sélectionnée, et **en ce que**, lorsque le trafic recommence à suivre la route que ledit protocole de routage distribué a sélectionnée, il est sûr qu'aucune boucle de routage ne se produise, et si des boucles de routage se produisent encore, elles sont détectées et rompues.

2. Procédé selon la revendication 1, **caractérisé en ce que** ladite erreur est une erreur de liaison, une erreur dans des ordinateurs, des routeurs qui maintiennent ladite route explicite.

3. Procédé selon la revendication 1, **caractérisé en ce que** ledit ERM opère selon les étapes pour :
- vérifier que la route explicite suggérée est exempte de boucles ;
- vérifier si des boucles potentielles peuvent se produire et identifier où de telles boucles peuvent se produire ;
- empêcher l'occurrence de boucles potentielles;
- détecter des erreurs le long de la route explicite établie
- rompre la boucle produite.

4. Procédé selon l'une quelconque des revendications précédentes, **caractérisé en ce que** ledit réseau est un réseau IP.

5. Dispositif pour le routage de paquets d'informations au moyen de protocoles de routage distribués dans un réseau, et comprenant un gestionnaire de route externe, ERM, **caractérisé en ce que** ledit ERM est agencé pour fournir une pluralité d'algorithmes de routage non distribués dans ledit réseau comme un complément aux algorithmes de routage qui sont utilisés par lesdits protocoles de routage distribués, **en ce que** ledit ERM comprend une partie agent ERM, ERMap, et une partie routeur ERM, ERMrp, ledit ERMap interagissant avec ledit ERMrp pour établir et maintenir des routes explicites et empêcher l'occurrence de boucles en spécifiant des mesures à prendre au niveau d'erreurs qui peuvent causer des boucles.

6. Dispositif selon la revendication 5, **caractérisé en ce que** ledit ERMap est agencé dans une machine qui a des fonctions pour calculer des routes explicites, et ledit ERMrp est agencé dans tous les routeurs qui sont impliqués dans les routes explicites qui sont établies via ledit ERM.

7. Dispositif selon la revendication 6, **caractérisé en ce que** ledit ERMap est agencé pour vérifier que les routes explicites calculées sont exemptes de boucles, pour vérifier si des boucles potentielles peuvent se produire, et identifier où de telles boucles peuvent se produire, pour empêcher l'occurrence de boucles potentielles,

8. Dispositif selon la revendication 7, **caractérisé en ce que** ledit ERMrp est agencé pour détecter des erreurs le long de routes explicites établies et pour empêcher ou rompre des boucles,

9. Dispositif selon l'une quelconque des revendications 5 à 8, **caractérisé en ce que** ledit réseau est un réseau IP.
